# EUROPÄISCHE PATENTANMELDUNG

(11) **EP 1 223 771 A1**
(43) Veröffentlichungstag der Anmeldung: **17.07.2002**
(21) Anmeldenummer: 01100838.0
(22) Anmeldetag: 15.01.2001
(51) Int. Cl.: H04Q 7/38

(54) **Zugriff auf einen Kanal, insbesondere auf einen Kanal für zufälligen Zugriff (RACH), in Abhängigkeit von der aktuellen Last und der Dienstgüte bzw. Kommunikationsphase**

(71) Anmelder: SIEMENS AKTIENGESELLSCHAFT, 80333 München (DE)
(72) Erfinder: Menzel, Christian, Dr., 82216 Maisach (DE)

(57) **Zusammenfassung**

Die Erfindung bezieht sich auf ein Verfahren zum Durchführen einer Zugriffssteuerung auf einen Kanal, insbesondere auf einen Kanal für beliebigen Zugriff (RACH) eines Kommunikationsystems, durch zumindest eine mit zumindest einer Netzstation kommunizierenden Teilnehmerstation, bei dem ein Zugriff der Teilnehmerstation auf diesen Kanal (RACH) nach einem lastabhängigen Kriterium erfolgt.

Um Daten höher priorisierter Dienste gegenüber Daten relativ dazu niedriger priorisierter Dienste oder um Random Access Bursts während einer laufenden nrt - Datenübertragung (Paketverbindung) gegenüber denen einer beginnenden nrt - Datenübertragung bei zunehmender Last auf dem Zugriffskanal (RACH) bevorzugt übertragen zu können, wird vorgeschlagen, als das Kriterium für den Zugriff eine Auslastungsinformation (RACH-LAST) dieses Kanals (RACH) in der Station zu verwenden. Entwerder übermittelt die Netzstation die Auslastungsinformation (RACH-LAST) vor der Verwendung an die Station über einen Nachrichtenkanal, oder aber die Station bestimmt die Auslastungsinformation aus der gemessenen Empfangsqualität eines überwachten Kanals.

## Beschreibung

Verfahren und Vorrichtung zum Durchführen einer von Dienstegüte und von Last abhängigen Zugriffssteuerung auf einen Kanal eines Kommunikationsystems, insbesondere auf einen Kanal für zufälligen Zugriff (Random Access CHannel)

Die Erfindung bezieht sich auf ein Verfahren zum Durchführen einer lastabhängigen Zugriffssteuerung auf einen Zufallszugriffs-Kanal eines Kommunikationsystems mit den oberbegrifflichen Merkmalen des Anspruchs 1 bzw. auf eine Vorrichtung zum Durchführen eines solchen Verfahrens.

In Funk-Kommunikationssystemen werden Informationen, beispielsweise Sprache, Bildinformationen oder andere Daten, mit Hilfe von elektromagnetischen Wellen über eine Funkschnittstelle zwischen sendender und empfangender Station (Netz/Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Sowohl im derzeit üblichen GSM-Standard (GSM: Global System for Mobile Communication) als auch im zukünftigen UMTS- oder UTRAN-Standard (UMTS: Universal Mobile Telecommunication System; UTRAN: Universal Terrestrial Radio Access Network) mit TDD- und FDD-Übertragungsmodi (T/FDD: Time/Frequency Division Duplex) sollen insbesondere für Sprachübertragungen sogenannte Echtzeit-Daten über paketorientierte Verbindungen übertragen werden. Unter Echtzeit-Daten werden Daten verstanden, die so wenig wie möglich durch Laufzeitverzögerungen, Abschneidungsverluste oder dergleichen beeinträchtigt sind. Dies bedingt, dass solche Echtzeit-Datendienste bei der Übertragung über die Luftschnittstelle in der Regel Vorrang gegenüber Nicht-Echtzeit-Datendiensten haben müssen. Für die Übertragung von Nicht-Echtzeit-Daten (non-realtime data), z.B. der typische Internetverkehr mit WorldWideWeb-Anwendungen, Dateiübertragungsprotokollen (FTP) und E-Mail, stehen insbesondere die Übertragungslücken der Echtzeit-Datendienste zur Verfügung. Insbesondere ist es dazu erforderlich, die Nicht-Echtzeit-Daten gut organisiert und ressourcenschonend übertragen zu können.

Das gegenwärtig im TDD-Modus geplante Verfahren benutzt für diese Datenübertragungen gemeinsam verwendete Kanäle, sogenannte Shared Channels, welche von vornherein pro Datenpaket zeitlich begrenzt und exklusiv zugewiesen werden. Die Zuweisung erfolgt, nachdem eine entsprechende Anforderung über einen Zugriffskanal von einer Teilnehmerstation beim System eintrifft.

Im GSM wird für den Zugriff (access) als Zugriffs-Steuerung bzw. Access-Control eine Zugriffs- bzw. Access-Gruppen basierte Steuerung eingesetzt. Die Zugriffsteuerung, auf den hier im weiteren Bezug genommen wird, erfolgt insbesondere nach einem Zufalls-Zugriffsprinzip (Random Access), was im Gegensatz zu ebenfalls bekannten Access Control- bzw. Zugriffssteuerungs-Mechanismen steht, die erst nach erfolgtem zufälligen Zugriff wirken und somit nicht die Last auf einem Kanal für zufälligen Zugriff (RACH: Random Access Channel) reduzieren. Bei dieser Zugriffsteuerung wird aus der Identität der Teilnehmerstation (z.B. IMSI) die Zugehörigkeit zu einer vorbestimmten Access- bzw. Zugriffs-Gruppe abgeleitet. Um in Überlastsituationen die Anzahl zugreifender Teilnehmerstationen zu reduzieren, wird über Nachrichten- bzw. Broadcast-Kanäle ausgestrahlt, welche Access-Gruppen in einer Funkzelle gerade zugreifen dürfen. Die Nummer dieser Access-Gruppe wird über die Zeit geändert, so dass die totale Blockierung einiger Teilnehmerstationen vermieden wird.

Nachteil dieser Methode ist, dass keine Differenzierung der Teilnehmerstationen bezüglich den von ihnen benutzten Diensten mit hoher Priorität, niedriger Priorität, ... und/oder bezüglich der aktuellen Phase der Kommunikation (Bereitschaftszustand/Ready-State, Ruhezustand/Idle State etc.) erfolgt bzw. möglich ist. Statt dessen wird den Teilnehmerstationen der Zugriff auf den Kanal für zufällige Zugriffe (RACH) nach einem Zufallsprinzip verwehrt, bei dem alle Teilnehmerstationen gleich gut bzw. gleich schlecht behandelt werden.

Eine solche Differenzierung ist jedoch wünschenswert, weil die Dringlichkeit des Sendens von Zugriffssignalen auf den Kanal für zufällige Zugriffe (Random Access Bursts) nicht von der Identität der Teilnehmerstation, sondern von dem gerade von dieser benutzten Dienst und der Phase der Kommunikation abhängt.

Die Aufgabe der Erfindung besteht darin, ein Verfahren bzw. eine Vorrichtung vorzuschlagen, mit denen die Last auf Kanälen, insbesondere Kanälen für zufällige Zugriffe gesteuert werden kann, wobei diese Steuerung insbesondere die Dienstespezifischen (QoS-spezifischen) Erfordernisse einer zugreifenden Teilnehmerstation berücksichtigen soll.

Diese Aufgabe wird durch das Verfahren mit den Merkmalen des Patentanspruchs 1 bzw. die Vorrichtung gemäß den Merkmalen des Patentanspruchs 12 gelöst.

Vorteilhafte Ausgestaltungen sind Gegenstand von abhängigen Ansprüchen.

Insbesondere ein Verfahren zum Durchführen einer Zugriffssteuerung auf einen Kanal für beliebigen Zugriff (RACH) eines Kommunikationsystems durch zumindest eine mit zumindest einer Netzstation kommunizierenden Station, bei dem ein Zugriff der Station auf diesen Kanal nach einem lastabhängigen Kriterium erfolgt, ist vorteilhaft, wenn als das Kriterium für den Zugriff eine Auslastungsinformation bzw. einen Auslastungswert dieses Kanals in der Station selber verwendet. Dadurch können Daten höher priorisierter Dienste gegenüber Daten relativ dazu niedriger priorisierter Dienste bei zunehmender Last auf dem Zugriffskanal bevorzugt übertragen werden.

Vorteilhafterweise übermittelt die Netzstation die Auslastungsinformation vor der Verwendung an die Station über einen Rundfunk- bzw. Nachrichtenkanal, was bei den bestehenden Kommunikationssystemen die Verwendung für sich bekannter Strukturen und Einrichtungen ermöglicht. Die Auslastungsinformation kann alternativ oder zusätzlich aber auch in der Station selber bestimmt werden, z.B. durch eine stationsseitige Kanalüberwachung. Dabei können vorteilhafterweise auch verschiedenartige Qualitätsmerkmale hinzugezogen werden.

Den verschiedenen von einer Station verwendbaren Diensten und/oder den Kommunikationsphasen (States) können vorteilhafterweise jeweils vorgegebene Werte der Auslastungsinformation eigens zugeordnet werden. Den verschiedenen Diensten und/oder den Kommunikationsphasen können aber auch entsprechende diskrete Prioritätslevel zugeordnet werden, was eine Standardisierung gegenüber der jeweiligen Zuordnung vorgegebener Werte vereinfacht.

Die Station vor einem Zugriff (Random Access) auf den Kanal für zufällige Zugriffe einen Vergleich der Diensteanforderung (QoS) bzw. des Prioritätslevels mit der Auslastungsinformation durchführen und nur bei positivem Vergleichsergebnis auf diesen Kanal zugreifen zu lassen, bietet ein einfaches Kriterium, das auch mit den technischen Möglichkeiten vieler bestehender Einrichtungen umsetzbar ist. Für den Vergleich der Diensteanforderung (QoS) bzw. des Prioritätslevels mit der Auslastungsinformation eine Referenzliste in der Station bereitzustellen und/oder zu dieser zu übertragen, vereinfacht eine Standardisierung weiter.

Als Auslastungsinformation kann insbesondere eine aktuelle Last des durch die Station zu verwendenden Kanals übermittelt werden, wobei die Auslastungsinformation vorteilhafterweise über eine vorgegebene Anzahl vergangener Empfangszeitschlitze der Netzstation oder über einen bestimmten vergangenen Zeitraum auf dem Kanal bestimmt werden kann. Die Auslastungsinformation kann beispielsweise auch über einen ermittelten Empfangs-/Störungspegel (SN level) auf dem durch die Station zu verwendenden Kanal, durch die Gesamtauslastung einer Zelle oder dergleichen bestimmt werden. Die Zuordnung der Auslastungsinformation kann fest standardisiert, also z.B. in einer Station fest einprogrammiert, und/oder Zell-spezifisch, also z.B. abhängig von den Bedingungen in einer Zelle zu einer Station übertragen, und/oder variabel bestimmt werden.

Die Zuordnung der Auslastungsinformation kann auch abhängig von Wartezeiten für einen Zugriff auf diesen Kanal variiert werden, so dass bei einer extrem hohen oder lang andauernden Auslastungssituationen mit der Zeit trotzdem für jeden Dienst ein Zugriff zugelassen wird. Die Kriterien, wann eine Auslastung für das Festlegen einer Zugriffssperre für einen bestimmten Dienst vorliegt, können variabel festgelegt werden.

Auch kann die Zuordnung der Auslastungsinformation in einer Station, welche mehrere Dienste parallel zueinander benutzt bzw. benutzen will, entsprechend der jeweiligen Diensteanforderungen (QoS) dieser Dienste anforderungsabhängig durchgeführt werden.

Ein solches Verfahren kann auch für die Wechsel zwischen den Phasen einer nrt-Datenübertragung (Paketverbindung) vorteilhaft angewendet werden: Wenn die Paketverbindung begonnen wird, dann ist gegebenenfalls eine längere Verzögerung einer Zufalls-Zugriffsanforderung (Random Access Burst) akzeptabel. Wenn jedoch während einer laufenden nrt-Datenübertragung ein Random Access Burst nur zum Zweck einer Bestätigung (Acknowledgement) oder der Einleitung einer Bestätigung gesendet werden muss, dann ist eine Verzögerung gegebenenfalls viel weniger akzeptabel, weshalb wie hier für z.B. zu startende Übertragungen andere Dienstelevel vorgegeben werden können als für bereits begonnene Übertragungen.

Solange die stationsseitig empfangene Feldstärke, Zugriffskanalfeldstärke oder Funkqualität des überwachten Kanals zu gering ist, kann die Station den Dienste- oder Prioritätslevel optional auch herabsetzen.

Eine Vorrichtung ermöglicht das Durchführen eines solchen Verfahrens in einem Kommunikationssystems mit zumindest einer Netzstation und einer Schnittstelle zum Übertragen von Daten zwischen der Netzstation und zumindest einer Station, wobei die Schnittstelle einen Kanal für beliebigen Zugriff (RACH) aufweist und wobei die Station für einen Zugriff auf diesen Kanal nach einem lastabhängigen Kriterium ausgebildet ist, wenn die Vorrichtung vorteilhafterweise zum Bereitstellen bzw. Verwenden einer Auslastungsinformation dieses Kanals als das Kriterium für den Zugriff in der Station verwendet wird.

Die Vorrichtung kann insbesondere als eine Auslastungswert-Bestimmungseinrichtung in zumindest einer netzseitigen Station und/oder als eine Auslastungswert-Bestimmungseinrichtung in der Station (MS) ausgebildet sein.

Eine Station bzw. Teilnehmerstation, über die gerade ein Sprachdienst mit Sprachaktivitätserfassung (Voice Activity Detection/DTX) läuft und die in den Sprachpausen die physikalische Ressource freigibt, sollte für die Anforderung der Ressource für eine nachfolgende Sprachperiode unbedingt einen Random Access Burst senden können, wohingegen eine Teilnehmerstation, über die gerade ein Nicht-Echtzeitdienst (nrt/non-realtime) läuft, das Senden einer Zugriffsanforderung und dementsprechend eines Datenpaketes in Aufwärtsrichtung durch Anwendung eines solchen Verfahrens verzögern kann.

Anwendungen sind insbesondere in Mobilfunknetzen vorteilhaft umsetzbar, in deren Zellen Daten paket-orientiert übertragen werden, wobei diese Zellen gleichzeitig für Echtzeit/realtime- und Nicht-Echtzeit-artige/non-realtime-artige Übertragungen verschiedener Teilnehmerstationen benutzt werden können. Diese Art des Gemisches von Verbindungen verschiedener Teilnehmerstationen oder verschiedener Verbindungen einer einzigen Teilnehmerstation wird insbesondere in zukünftigen Kommunikationssystemen der Normalfall sein.

Ein Ausführungsbeispiel wird nachfolgend anhand der Zeichnung näher erläutert. Es zeigen:
- Fig. 1: ein beispielhaftes Funk-Kommunikationssystem mit mehreren mit einer Basisstation kommunizierenden mobilen Stationen und
- Fig. 2: schematisch eine Darstellung eines momentanen Lastwertes auf einem Kanal für zufälligen Zugriff bzw. einer geforderten Dienstegüte in einer der mobilen Stationen.

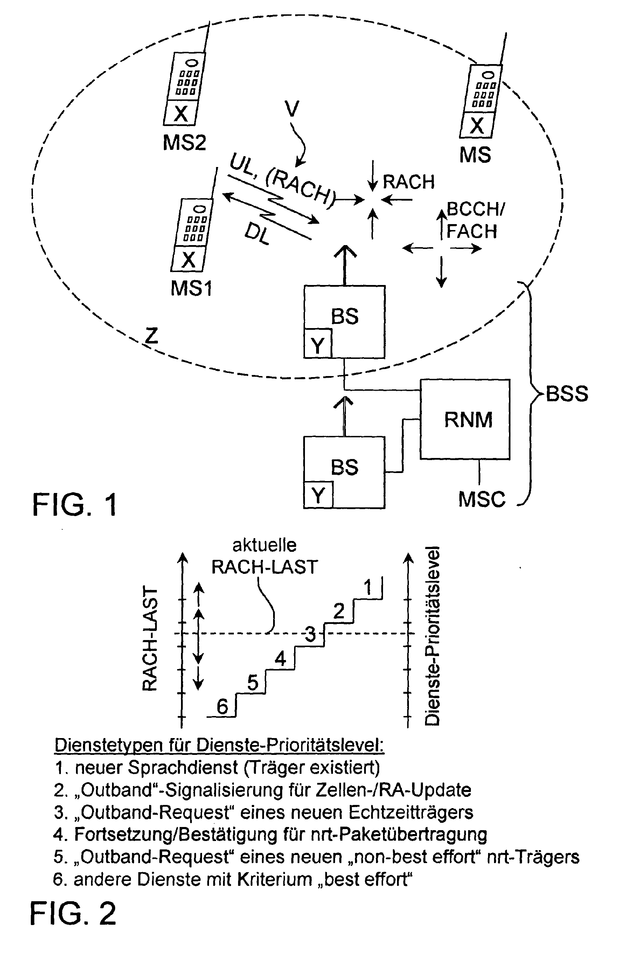

Das in Fig. 1 dargestellte Mobilfunksystem als Beispiel eines bekannten Funk-Kommunikationssystems besteht aus einer Vielzahl von Netzelementen, insbesondere von Mobilvermittlungsstellen MSC, Einrichtungen RNM zum Zuteilen von funktechnischen Ressourcen, Basisstationen BS und in der untersten Hierarchieebene Teilnehmerstationen MS.

Die Mobilvermittlungsstellen MSC, die untereinander vernetzt sind und von denen hier nur eine angedeutet ist, stellen den Zugang zu einem Festnetz oder einem anderen Funknetz her. Weiterhin sind diese Mobilvermittlungsstellen MSC mit jeweils zumindest einer der Einrichtungen RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle V eine Verbindung zu Teilnehmerstationen, z.B. mobilen Stationen MS, MS1 bzw. MS2 oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt.

Die beispielhaft bestehenden Verbindungen V sind als Abwärtsverbindungen DL und Aufwärtsverbindungen UL zur Übertragung von Nutzinformationen und Signalisierungsinformationen zwischen einer mobilen Teilnehmerstation MS, MS1 bzw. MS2 und der entsprechend mit diesen in Verbindung stehenden Basisstation BS dargestellt. Weiterhin ist jeweils ein Nachrichtenbzw. Organisationskanal (FACH oder BCCH: Broadcast Control CHannel) dargestellt, der zur Übertragung von Nutz- und Signalisierungsinformationen mit einer definierten Sendeleistung von jeder der Basisstationen BS für alle mobilen Stationen MS, MS1 bzw. MS2 im Bereich der entsprechenden Funkzelle Z bereitgestellt wird.

In bekannter Weise bucht sich eine in einer Zelle Z in Betrieb genommene Teilnehmerstation MS bei der zuständigen Basisstation BS ein. Dabei geht sie von einem untätigen Zustand in einen Bereitschaftszustand über, in dem sie über ihre internationale Teilnehmer-Identifikationsnummer von einer anderen Telekommunikationseinrichtung aus anrufbar ist.
Für Zugriffe seitens der Teilnehmerstationen MS zur Signalisierung eines Sendebedarfs stellt die Basisstation BS einen Kanal für willkürliche bzw. zufällige Zugriffe RACH (Random Access CHannel) zur Verfügung. Nach einer solchen Zugriffssignalisierung weist die Basisstation BS der Teilnehmerstation MS für die anstehende Datenübertragung entsprechende Ressourcen auf einem geeigneten Kommunikationskanal (V) zu.

Das bevorzugte Ausführungsbeispiel zeichnet sich durch drei Aspekte aus, die nicht zwingend erforderlich alle zusammenhängend zur Umsetzung des Verfahrens erforderlich bzw. alternativ ausführbar sind.

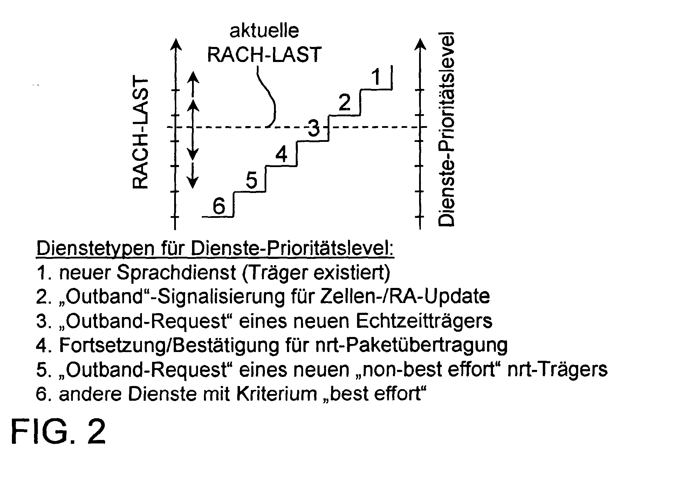

Die Basisstation BS sendet in einem Nachrichtenkanal eine Information (Fig. 2: RACH-LAST) über die aktuelle Last auf dem Kanal RACH, auf den ein zufälliger bzw. willkürlicher Zugriff erfolgen soll. Außerdem werden den verschiedenen Diensten und/oder den Kommunikationsphasen (States) bestimmte unterschiedliche Prioritätslevel zugeordnet, die wiederum den Lastwerten (RACH-LAST) zugeordnet werden. Weiterhin führt eine Teilnehmerstation MS vor einem Zugriff (Random Access) auf den Kanal für zufällige Zugriffe RACH einen Vergleich des Prioritätslevels des von ihr anzufordernden Dienstes mit dem zugeordneten Lastwert RACH-LAST durch und greift auf diesen Kanal RACH bei positivem Vergleichsergebnis zu.

Allgemeiner ausgedrückt werden im Kommunikationssystem den verschiedenen unterstützten Diensten abhängig von deren Dienstegüte (QoS: Quality of Service) Prioritätslevel zugewiesen, die in Fig. 2 als Dienste-Prioritätslevel bezeichnet werden. Außerdem werden dem Kanal für zufällige Zugriffe RACH für dessen Auslastung Auslastungswerte RACH-LAST zugewiesen. Die Skalen der Prioritätslevel und der Auslastungswerte RACH-LAST weisen zweckmäßigerweise eine gleiche Anzahl von Werten auf. Alternativ oder zusätzlich kann z.B. auch eine Referenzliste gebildet werden, in der die Werte der beiden Skalen aufeinander abgebildet werden.

Bevor eine Teilnehmerstation MS einen Zugriff (Random Access) auf den Kanal für zufällige bzw. beliebige Zugriffe RACH durchführt, stellt sie dessen Auslastung anhand des "aktuellen" Auslastungswertes RACH-LAST fest. Anschließend vergleicht die Teilnehmerstation MS den aktuellen Auslastungswert RACH-LAST mit dem Dienste-Prioritätslevel des Dienstes oder States, für den sie eine Zugriffsanforderungs-Signalisierung (RACH-Burst) über den Kanal für zufällige Zugriffe RACH senden will.

Folgt als Ergebnis des Vergleiches, dass die Priorität des Dienstes/States mit Blick auf den aktuellen Auslastungswert RACH-LAST hoch genug ist, dann darf die Teilnehmerstation MS die Zugriffsanforderungs-Signalisierung (RACH Burst) senden. Folgt als Ergebnis des Vergleiches, dass die Priorität des Dienstes/States mit Blick auf den aktuellen Auslastungswert RACH-LAST nicht hoch genug ist, dann darf die Teilnehmerstation MS die Zugriffsanforderungs-Signalisierung (RACH Burst) nicht senden.

Sofern die Verwendung einer Referenzliste vorgesehen ist, wird bei diesem Vergleich seitens der Teilnehmerstationen MS diese Referenzliste mit dem Bezug zwischen den Auslastungswerten RACH-LAST und den Dienste-Prioritätsleveln verwendet. Die Referenzliste kann als im Kommunikationssystem vorgegebene Referenzliste fest in allen das Verfahren unterstützenden Teilnehmerstationen MS abgespeichert sein. Alternativ oder zusätzlich kann aber auch eine Signalisierung der Werte einer solchen Referenzliste erfolgen, so dass einer Teilnehmerstation MS stets die im Kommunikationssystem aktuellen bzw. aktualisierten Werte der Referenzliste bereitgestellt werden. Dies ermöglicht insbesondere auf wechselnde Anteile von Teilnehmerstationen MS mit Diensten mit verschiedener Dienstegüte einzugehen.

Bei der Bestimmung des aktuellen Auslastungswertes RACH-LAST wird die aktuelle Last auf dem zu verwendenden Kanal, hier dem Kanal für zufällige Zugriffe RACH festgestellt. Dabei ist der Begriff "aktuell" weit auszulegen und umfaßt je nach im Kommunikationssystem angesetzter Definition z.B. die Last auf dem Kanal RACH während des letzten RACH-Empfangszeitschlitzes der Basisstation BS, während einer bestimmten Anzahl der vorhergegangen RACH-Empfangszeitschlitze oder über einen bestimmten vergangenen Zeitraum. Der Begriff "Last" ist ebenfalls weit auslegbar und umfaßt z.B. eine vorgegebene Anzahl von RACH-Bursts pro Meßperiode oder einen bestimmten Empfangs-/Störungspegel (SN: Signal/Noise level) auf dem Kanal für zufällige Zugriffe RACH während eines oder mehrerer vorhergegangener RACH-Empfangszeitschlitze. Beispielsweise kann festgelegt werden, dass die Last auf dem Kanal für zufällige Zugriffe RACH sehr hoch ist, wenn von den letzten zehn aufeinanderfolgenden RACH-Zeitschlitzen mehr als vier belegt waren. Auch die Gesamtlast in einer Zelle Z oder dergleichen können als Belegungsgrad der Zelle Z herangezogen werden.

Den verschiedenen Diensten und/oder den Kommunikationsphasen (States) werden unterschiedliche Prioritätslevel zugeordnet. Diese Zuordnung wird bevorzugt entweder fest standardisiert und/oder z.B. Zell-spezifisch mittels der Basisstation BS einer oder mehrerer bestimmter Zellen Z signalisiert. Die Begriffe "Kommunikationsphase" und "State" stehen nicht nur für den Zustände an sich sondern insbesondere für State- bzw. Zusandswechsel, da das Senden einer Zugriffsanforderung (RACH Burst) in der Regel einen Zustandswechsel (z.B. Ruhe/Idle nach Verbunden/Connected oder Warten/Waiting nach Aktiv/Active) zum Ziel hat.

Möglich ist z.B. auch eine variable Zuordnung von Prioritätsleveln, wenn z.B. die Anforderungen oder Bedingungen in verschiedenen Zellen Z unterschiedlich sind. So kann beispielsweise für eine Zelle Z in einem Bereich mit im Vergleich zur Sprachdaten-Übertragungsqualität höheren Anforderungen an hohe Datenraten für die Übertragung von reinen Daten in Form von Steuerbefehlen an chemische Anlagen andere Prioritätslisten aufgestellt werden, als in den benachbarten Zellen, in denen den Diensten für z.B. eine Sprachübertragung die höchste Priorität zugewiesen werden.

Bei einer besonders einfachen Ausführungsform werden die aktuellen Auslastungswerte RACH-LAST eines Kanals für zufälligen Zugriff RACH netzseitig fortwährend neu bestimmt. Die Basisstation BS sendet mit technisch möglichst minimaler Verzögerung über einen Broadcast- bzw. Nachrichtenkanal fortwährend den Auslastungswert, also eine Information über die aktuelle Last auf dem Kanal RACH. Diese Auslastungswerte RACH-LAST werden von den Teilnehmerstationen MS empfangen und so für den nächsten durchzuführenden Vergleich mit einem Dienste-Prioritätlevel aktuell verwendet.

Möglich ist alternativ oder zusätzlich aber auch die Bestimmung des aktuellen Auslastungswertes RACH-LAST des Kanals, auf den die Teilnehmerstation MS per Zufallszugriff (Random Access) zugreifen möchte, in der Teilnermerstation MS1 selber möglich. Dazu kann die Teilnehmerstation MS1 Zugriffe anderer Teilnehmerstationen MS2 auf den Kanal für beliebige Zugriffe RACH auswerten, soweit sie Signale solcher anderer Teilnehmerstationen MS2 aufgrund deren Lage in der Zelle Z empfangen kann. Problematisch können u.U. Teilnehmerstationen MS sein, die zwar mit der Basisstation BS kommunizieren, deren Zugriffe von der beobachtenden Teilnehmerstation MS1 aufgrund der Lage bzw. Entfernung in der Zelle Z nicht empfangen werden können. Eine solche verfahrensweise ist dann vorteilhaft, wenn eine Teilnehmerstation MS in den Bereich einer Basisstation gelangt, die für ein entsprechendes Verfahren nicht ausgestattet ist und kein Auslastungssignal RACH-LAST aussendet.

Vorteilhaft ist auch die Definition von Wartezeiten, bis die Zugriffsanforderung (RACH-Burst) gesendet werden darf. Eine solche Wartezeit kann sich z.B. nach der Größe des Unterschiedes zwischen erlaubter und benötigter Priorität bemessen.

Insbesondere kann festgelegt werden, dass einer Teilnehmerstation MS, die für den von ihr anzufordernden Dienst einen Prioritätslevel vorbestimmt hat, nach einer vorgegebenen Zeitdauer ohne Sendemöglichkeit aufgrund eines zu hohen Auslastungswertes RACH-LAST den vorbestimmten Prioritätslevel um eine oder mehrere Stufen erhöht. Dieser Vorgang kann bis zu einem erfolgreichen Zugriff sukzessive wiederholt werden, wobei der Wert des Prioritätslevels für danach erfolgende Zugriffe zweckmäßigerweise auf den ursprünglichen Wert zurückgesetzt wird.

Im Falle einer Teilnehmerstation MS die Daten für mehrere Dienste zu übertragen hat, entscheidet die Teilnehmerstation MS entsprechend dem Vergleichswert, für welche der beabsichtigten Dienste Zugriffsanforderungen gesendet werden dürfen. Insbesondere bei einer solchen Station ist zusätzlich auch die Anwendung von Verfahren vorteilhaft, die Wartezeiten oder insgesamt zu übertragende Datenmengen für die jeweiligen Dienste berücksichtigen.

Fig. 2 zeigt ein Diagramm, bei dem auf einer rechtsseitigen Skala die Dienste-Prioritätslevel aufgetragen werden, wobei beispielsweise sechs Dienste-Prioritätslevel 1 - 6 vorgesehen sind. Auf der linksseitigen Skala werden Werte der Auslastung RACH-LAST des Kanals, auf den der Zufallszugriff erfolgen soll, aufgetragen. Wie ausgeführt, tragen die Skalen zweckmäßigerweise aufeinander abgestimmte Werte. Die Zuordnung der Werte der Dienste-Prioritätslevel zu den Werten der Auslastung RACH-LAST auf diesem Kanal RACH wird durch die hier aus Darstellungsgründen stufenförmige Abbildung zwischen den beiden Skalen dargestellt.

Eine Teilnehmerstation MS, welche einen oder mehrere Dienste benutzt bzw. benutzen will, ordnet diese Dienste gemäß der in Fig. 2 beispielhaft dargestellten Tabelle den Prioritätsleveln zu. Aus dem Vergleich mit dem vorzugsweise von der Basisstation BS empfangenen Auslastungswert RACH-LAST leitet die Teilnehmerstation MS ab, ob sie für den beabsichtigten Dienst eine Zugriffsanforderung senden darf oder ob nicht. Bei der Situation gemäß Fig. 2 ist der aktuelle Auslastungswert RACH-LAST als gestrichelte Linie dargestellt, deren Höhe dem entsprechenden Wert auf der Auslastungsskala entspricht. Bei dem dargestellten Beispiel dürfen Zugriffsanforderungen nur für die Dienste- bzw. Servicetypen 1 und 2 gesendet werden, da nur diese oberhalb des momentanen Auslastungswertes RACH-LAST liegen.

Die Prioritätslevel können beispielsweise wie in der Tabelle aus Fig. 2 zugeordnet werden. Dabei erhält die höchste Priorität 1 ein neuer Sprachdienst, wie der, für den in den geplanten Kommunikationssystemen bereits ein Träger vorgesehen ist. Die zweit höchste Priorität 2 wird einer Außerband/Outband-Signalisierung für Zellen- oder Zufallszugriffs-(RA) Aktualisierungen zugeordnet. Die dritt höchste Priorität 3 wird einer Außerband-/Outband-Anforderung eines neuen Echtzeitträgers zugeordnet. Die viert höchste Priorität 4 wird für die Fortsetzung oder Bestätigung einer bereits begonnenen Nicht-Echtzeit-Paketdatenübertragung (nrt) reserviert. Die fünft höchste Priorität 5 wird für eine Außerband-/Outband-Anforderung für eine neue Nicht-Echtzeit-Paketdatenübertragung (nrt) mit dem Kriterium des best möglichen Übertragungserfolgs (best effort) reserviert. Die hier niedrigste Priorität 6 wird allen anderen Diensten, insbesondere Diensten mit dem Kriterium best effort zugeordnet.

Zur Umsetzung eines solchen Verfahrens werden netzseitige Stationen, insbesondere Basisstationen BS, mit Auslastungswert-Bestimmungseinrichtungen Y und/oder Teilnehmerstationen MS mit Auslastungswert-Bestimmungseinrichtungen X ausgestattet. Im Idealfall können dabei bereits vorhandene Einrichtungskomponenten X, Y zum Durchführen der erforderlichen Verfahrensschritte verwendet bzw. entsprechend programmiert werden.

## Patentansprüche

1. Verfahren zum Durchführen einer Zugriffssteuerung auf einen Kanal (RACH) eines Kommunikationsystems durch zumindest eine mit zumindest einer Netzstation (BS) kommunizierenden Station (MS; MS1), bei dem ein Zugriff der Station (MS) auf diesen Kanal (RACH) nach einem lastabhängigen Kriterium erfolgt,
**dadurch gekennzeichnet, dass**
als das Kriterium für den Zugriff eine auf diesen Kanal (RACH) direkt oder indirekt bezogene Auslastungsinformation (RACH-LAST) in der Station (MS; MS1) verwendet wird.

2. Verfahren nach Anspruch 1, bei dem
die Netzstation (BS) die Auslastungsinformation (RACH-LAST) vor der Verwendung an die Station (MS; MS1) übermittelt.

3. Verfahren nach einem vorstehenden Anspruch, bei dem
die Auslastungsinformation (RACH-LAST) durch eine stationsseitige Kanalüberwachung oder Verkehrsüberwachung in der Station (MS1) bestimmt wird.

4. Verfahren nach einem vorstehenden Anspruch, bei dem verschiedenen Diensten und/oder den Kommunikationsphasen (States) jeweils vorgegebene Werte der Auslastungsinformation (RACH-LAST) zugeordnet werden.

5. Verfahren nach einem vorstehenden Anspruch, bei dem verschiedenen Diensten und/oder den Kommunikationsphasen (States) entsprechende Prioritätslevel zugeordnet werden.

6. Verfahren nach Anspruch 4 oder 5, bei dem
die Station (MS) vor einem Zugriff (Random Access) auf den Kanal (RACH) einen Vergleich der Diensteanforderung (QoS) bzw. des Prioritätslevels mit der Auslastungsinformation (RACH-LAST) durchführt und nur bei positivem Vergleichsergebnis auf diesen Kanal (RACH) zugreift.

7. Verfahren nach einem der Ansprüche 4 - 6, bei dem
für den Vergleich der Diensteanforderung (QoS) bzw. des Prioritätslevels mit der Auslastungsinformation (RACH-LAST) eine Referenzliste in der Station (MS) bereitgestellt und/oder zu dieser übertragen wird.

8. Verfahren nach einem der Ansprüche 4 - 7, bei dem
die Zuordnung der Auslastungsinformation (RACH-LAST) fest standardisiert und/oder Zell-spezifisch und/oder variabel bestimmt wird.

9. Verfahren nach einem der Ansprüche 4 - 8, bei dem
die Zuordnung der Auslastungsinformation (RACH-LAST) abhängig von Wartezeiten für einen Zugriff variiert wird.

10. Verfahren nach einem der Ansprüche 4 - 9, bei dem
die Zuordnung der Auslastungsinformation (RACH-LAST) in der Station (MS) als einer Station, welche mehrere Dienste parallel zueinander benutzt bzw. benutzen will, entsprechend der jeweiligen Diensteanforderungen (QoS) anforderungsabhängig durchgeführt wird.

11. Verfahren nach einem vorstehenden Anspruch, bei dem
eine gemessene oder ermittelte Empfangsqualität, insbesondere Feldstärke, Zugriffskanalfeldstärke oder Funkqualität (SN level) eines überwachten Kanals oder einer Zelle (Z), als die Auslastungsinformation (RACH-LAST) oder zu einer Korrektur einer bestehenden Auslastungsinformation (RACH-LAST) bzw. eines Prioritätslevels verwendet wird.

12. Vorrichtung in einem Kommunikationssystems mit
- zumindest einer Netzstation (BS) und
- zumindest einer Schnittstelle (V; RACH) zum Übertragen von Daten zwischen der Netzstation (BS) und zumindest einer Station (MS),
- wobei die Schnittstelle einen Kanal (RACH) aufweist und
- wobei die Station (MS) für einen Zugriff auf diesen Kanal (RACH) nach einem lastabhängigen Kriterium ausgebildet ist,
**dadurch gekennzeichnet, dass**
- die Vorrichtung (X; Y) zum Bereitstellen bzw. Verwenden einer Auslastungsinformation (RACH-LAST) dieses Kanals (BACH) als das Kriterium für den Zugriff in der Station (MS; MS1) ausgestaltet ist.

13. Vorrichtung nach Anspruch 12, wobei
die Vorrichtung als eine Auslastungswert-Bestimmungseinrichtung (Y) in zumindest einer netzseitigen Station (BS) und/oder als eine Auslastungswert-Bestimmungseinrichtung (X) in der Station (MS) ausgebildet ist.
